# EUROPEAN PATENT APPLICATION

(11) **EP 1 720 321 A1**
(43) Date of publication of application: **08.11.2006**
(21) Application number: 05710018.2
(22) Date of filing: 09.02.2005
(51) Int. Cl.: H04L 29/08, A63H 3/33, G06F 3/06, G06F 9/445

(54) **DATA TRANSMISSION METHOD, DATA TRANSMISSION SYSTEM, DATA TRANSMISSION DEVICE, AND DATA STRUCTURE**

(30) Priority: 13.02.2004 JP 2004037421
(71) Applicant: Nishino, Kohei, Hiratsuka-shi, Kanagawa, 259-1217 (JP); Nishino, Takae, Tokyo 165-0026 (JP)
(72) Inventor: Nishino, Kohei, Hiratsuka-shi, Kanagawa, 259-1217 (JP); Nishino, Takae, Tokyo 165-0026 (JP)
(74) Representative: Viering, Jentschura & Partner
(86) International application number: PCT/JP2005/001966
(87) International publication number: WO 2005/079040

(57) **Abstract**

A toy (10) equivalent to a storage medium containing communication start data and identification data is connected to an intermediate connection device (50) having identification data and connected to a PC (20). The PC (20) reads out the communication start data from the toy (10) and reads out identification data respectively from the toy (10) and the intermediate connection device (50). By a communication program started by the communication start data, the PC (20) establishes connection to a server (30) and transmits the read-out identification data to the server (30). The server identifies distribution data corresponding to a combination of the identification data received, according to the data identification table, and transmits the identified distribution data to the PC (20).

## Description

### BACKGROUND OF THE INVENTION

### Field of the Invention

The present invention relates to a data transmission method, a data transmission system, a data transmission device and a data structure, in which various data can be transmitted corresponding to a combination of a plurality of storage mediums (these plural storage mediums have an appearance, for example, as a toy).

### Description of the Conventional Art

Conventionally, there are a system and method in which a communication apparatus accesses to a specific website using a storage medium storing ID data, various data and the like, so as to acquire required data from a server of an access destination. For example, there are a system and method in which a storage medium storing identification data is connected to a cradle or a reader device connected to a personal computer, and the personal computer reads out the identification data and accesses to a server of a specific provider, so as to acquire required data. In addition, ideas for giving an added value to the above-described storage medium has been also proposed, by making the storage medium to be a toy having an appearance of a shape corresponding to a model of a dinosaur, an automobile or the like, or various characters (refer to Japanese Patent Applications Laid Open No. 2003-187096, 2002-63092).

On the other hand, in addition to the above-described system and method for acquiring data using the storage medium, there is a device in which a doll capable of some operation is connected to a personal computer, so as to control the action of the doll on the basis of control data acquired from a network (refer to Japanese Patent Application Laid Open No. 2000-135384).

### Summary of the Invention

As for the above-described system and method indicated in Japanese Patent Application Laid Open No. 2003-187096, 2002-63092, since various data is distributed corresponding to each storage medium, kinds of data which can be distributed are limited, so there is a problem that a possessor of the storage medium (having an appearance as a toy) cannot be satisfied enough. For example, a possessor having two different kinds of storage mediums (having an appearance as a toy) can acquire only two kinds of data corresponding to the number of the possessed storage mediums (having an appearance as a toy), so it is difficult to make a possessor (a user) to have strong desire for collecting more storage mediums (having an appearance as a toy). Further, the distributed data is not changed even when a distribution situation and a state of a distribution destination are changed. That is, there is no elaborate idea with respect to continuing data distribution for a long time so it is difficult to make a user to continue the data distribution for a long time. Furthermore, data content to be distributed does not relate to an area and a place where a user is positioned, so there is a problem that data relating to a user's position cannot be distributed.

On the other hand, the device indicated in Japanese Patent Application Laid Open No. 2000-135384 has a structure only for making a doll to act, and there is a problem that the action of the doll cannot be effectively used. Further, a device disclosed in Japanese Patent Application Laid Open No. 2000-135384 controls only the action of a single doll, so that there is a problem that the device cannot correspond to actions of a plurality of dolls.

The present inventions solves the above-described problems, and an objective of the present invention is to provide a data transmission method, a data transmission system, and a data transmission device, in which a plurality of storage mediums having identification data (these plural storage mediums have an appearance, for example, as a toy) are combined and connected, so as to transmit various kinds of data.

Further, an objective of the present invention is to provide a data transmission method and a data transmission system in which a storage medium (having an appearance as a toy) is connected to a communication apparatus via an intermediate connection device such as a hub, so as to transmit various data while considering the existence of the intermediate connection device.

Further, an objective of the present invention is to provide a data transmission method in which a suitable data transmission processing can be carried out, for a case which corresponds to a continuing time for transmitting data to a communication apparatus, for a case which corresponds to a case in which a storage medium (having an appearance as a toy) is added and connected later, and for a case which corresponds to a place where the communication apparatus is positioned.

Furthermore, an objective of the present invention is to provide a data transmission system, a data transmission device and a data structure, in which each toy connected to transmission destinations can be operated in accordance with the progress of contents by transmitting data having the data structure which is accompanied by operation data for operating a toy corresponding to a predetermined scene of contents data.

An aspect of a data transmission method according to a first invention in order to solve the above-described problems is as follows. In the data transmission method, a data transmission device transmits data to a communication apparatus having a plurality of external connection units. The communication apparatus detects that a storage medium storing specific identification data and communication start data is connected to one or a plurality of the external connection units, where the communication start data are for making the communication apparatus to start a communication processing; reads out the communication start data from one of a plurality of the connected storage mediums and the identification data from all connected storage mediums when detecting that a plurality of storage mediums are connected; starts the communication processing by the read-out communication start data; and transmits all the identification data to the data transmission device. Then, the data transmission device transmits data, which correspond to all the received identification data, to the communication apparatus.

Further, an aspect of a data transmission method according to a second invention is as follows. In the data transmission method, a data transmission device transmits data to a communication apparatus connected with an intermediate connection device which can connect to a storage medium and has specific identification data. The communication apparatus detects that a storage medium storing specific identification data and communication start data is connected to the intermediate connection device, where the communication start data are for making the communication apparatus to start a communication processing; reads out the communication start data from the connected storage medium and the identification data from the connected storage medium and the intermediate connection device, respectively when detecting that the storage medium is connected; starts the communication processing with the read-out communication start data; and transmits all identification data to the data transmission device. Then, the data transmission device transmits data, which correspond to all the received identification data, to the communication apparatus.

Further, an aspect of a data transmission method according to a third invention is as follows. In the first and second inventions, the data transmission device has a table in which data to be transmitted, corresponding to the identification data is defined; and specifies data corresponding to all the received identification data on the basis of the table.

Further, an aspect of a data transmission method according to a fourth invention is as follows. In any one of the first invention to the third invention, the data transmission device measures the time from the start of transmitting data; and changes data to be transmitted when the measured time reaches to the predetermined time.

Further, an aspect of a data transmission method according to a fifth invention is as follows. In any one of the first invention to the fourth invention, when detecting that the storage medium is connected while receiving data from the data transmission device; the communication apparatus reads out identification data from the detected storage medium and transmits the read-out identification data to the data transmission device. Then, the data transmission device transmits menu data to the communication apparatus where the menu data are for accepting an instruction indicating whether data to be transmitted, corresponding to the received identification data are changed or not.

Further, an aspect of a data transmission method according to a sixth invention is as follows. In the data transmission method, a data transmission device transmits data to a communication apparatus having an external connector. The communication apparatus detects that a storage medium storing specific identification data and communication start data is connected to the external connector, where the communication start data are for making the communication apparatus to start a communication processing; reads out the communication start data and the identification data from the connected storage medium when detecting that the storage medium is connected; starts the communication processing with the read-out communication start data; and transmits the identification data to the data transmission device. Then, the data transmission device transmits data corresponding to the received identification data to the communication apparatus; measures the time from the start of transmitting data; and changes data to be transmitted when the measured time reaches to the predetermined time.

Further, an aspect of a data transmission method according to a seventh invention is as follows. In the data transmission method, a data transmission device transmits data to a communication apparatus having a position detection means and an external connector. The communication apparatus detects that a storage medium storing specific identification data and communication start data is connected to the external connector, where the communication start data are for making the communication apparatus to start a communication processing; detects a position by the position detecting means and reads out the communication start data and the identification data from the connected storage medium when detecting that the storage medium is connected; starts the communication processing with the read-out communication start data; and transmits the identification data and position data with respect to the detected position to the data transmission device. The data transmission device transmits data, which correspond to the received identification data and position data, to the communication apparatus.

An aspect of a data transmission system according to an eighth invention is as follows. In the data transmission system, a data transmission device transmits data corresponding to the received identification data to a communication apparatus. The system comprises a storage medium which has a connection unit capable of being connected with an external apparatus and stores specific identification data and communication start data for making the communication apparatus to start a communication processing. The communication apparatus comprises a plurality of external connection units; a detection means for detecting that the storage medium is connected to one or more of a plurality of the external connection units; a reading-out means for reading out communication start data from one of a plurality of the connected storage mediums and identification data from all the connected storage mediums, when the detection means detects that a plurality of storage mediums are connected; and a transmission means for transmitting all the identification data to the data transmission device by starting the communication processing with the communication start data read-out by the reading-out means;. The data transmission device comprises a data transmission means for transmitting data corresponding to all the received identification data.

An aspect of a data transmission system according to a ninth invention is as follows. In the data transmission system, a data transmission device transmits data corresponding to the received identification data to a communication apparatus. The system comprises a toy having an operation unit, a connection unit capable of being connected to an external apparatus, an operation control unit for operating the operation unit on the basis of operation data accepted via the connection unit, and a data storage unit storing specific identification data and communication start data for making the communication apparatus to start the communication processing; and an intermediate connection device which can connect with the toy, has specific identification data, and is connected to the communication apparatus. The communication apparatus comprises a detection means for detecting that the toy is connected to the intermediate connection device; a reading-out means for reading out communication start data from the connected storage medium and identification data from the connected storage medium and the intermediate connection device respectively, when the detection means detects the connection of the storage medium; and a transmission means for starting the communication processing with the communication start data read-out by the reading-out means, and for transmitting all the read-out identification data to the data transmission device. The data transmission device comprises a storage unit storing a plurality kinds of data having a data structure, which is accompanied by operation data for operating the operation unit in a scene shown by contents data relating to a cartoon, an animation, a game or a movie in which a character relating to the toy appears; a table in which identification data corresponding to respective data stored in the storage unit are defined; an identification means for identifying data corresponding to all the received identification data on the basis of the table; and a data transmission means for transmitting the data identified by the identification means.

An aspect of a data transmission device according to a tenth invention is as follows. The device comprises a storage unit storing a plurality kinds of data having a data structure which is accompanied by operation data for operating a toy which can be operated in a scene shown with contents data relating to a cartoon, an animation, a game or a movie in which a character appears; a table in which identification data corresponding to respective data stored in the storage unit is defined; an identification means for identifying data corresponding to the received identification data on the basis of the table; and a data transmission means for transmitting the data identified by the identification means.

An aspect of a data structure according to an eleventh invention is as follows. The data structure is accompanied by operation data for operating a toy which can be operated, in accordance with an action of a character in a scene shown by contents data relating to a cartoon, an animation, a game or a movie, in which the character appears.

In the first and eighth inventions, the data transmission device transmits different data corresponding to respective identification data stored in a plurality of storage mediums. So, data to be transmitted is changed in accordance with to a combination of the storage mediums connected to the communication apparatus. As a result of this, the data transmission device can transmit various data corresponding to the combination of the storage mediums.

In the second invention, the data transmission device transmits data corresponding to the identification data stored in the storage medium and the identification data stored in the intermediate connection device. So, a kind of data to be transmitted is changed by the existence of the intermediate connection device. In addition, when the existence of the intermediate connection device is considered, it is preferable to add new contents to the data transmitted by the data transmission device. Thereby, the significance of the existence of the intermediate connection device can be enhanced.

In the third invention, data corresponding to the all identification data received by the data transmission device is identified on the basis of the table in which the data to be transmitted, corresponding to the identification data is defined. So, the data transmission device can easily and promptly carry out a processing for identifying data to be transmitted in a plurality kinds of data.

In the fourth and sixth inventions, the time from the start of transmitting data by the data transmission device is measured. Further, when the measured time reaches to the predetermined time, the data transmission device changes data to be transmitted. So, a kind of data to be transmitted can be changed in accordance with the time from the start of transmitting data.

In the fifth invention, when the storage medium is additionally connected later to the communication apparatus which is receiving data, the identification data of the storage medium is transmitted to the data transmission device. Corresponding to this transmission, the data transmission device transmits selection menu data to the communication apparatus, where the selection menu data is for accepting the change of data. So, an operation for deciding whether the received data is changed or not can be carried out on the communication apparatus side. Therefore, the change of data transmitted from the data transmission device can be decided on the basis of intention of a user of the communication apparatus.

In the seventh invention, when the storage medium is connected to the communication apparatus, the communication apparatus detects an own position, and transmits the position data showing the detected position and the identification data for identifying the storage medium to the data transmission device. Therefore, the data transmission device can transmit the data, which corresponds to the received identification data and relates to a place where the communication apparatus is positioned.

In the ninth invention, the toy which can be operated is connected to the communication apparatus via the intermediate connection device, and the data transmission device transmits data, in which the contents data showing a predetermined scene is accompanied by the operation data for making the toy to operate, to the toy. Thereby, each toy can be operated corresponding to a state of progress of reproducing the scene shown with the transmitted contents data.

In the tenth invention, the data transmission device includes the table for storing a plurality of data, in which the contents data showing the predetermined scene is accompanied by the operation data for making the toy to operate, and for defining the data corresponding to the identification data. Therefore, the data transmission device can transmit the data corresponding to the identification data transmitted from the external, so as to operate the toy, which can be operated and exists at the transmission destination, on the basis of the operation data.

In the eleventh invention, a data structure which is accompanied by the operation data for operating the toy is adopted in a predetermined portion in a scene shown by the contents data such as a cartoon or the like in which a character appears. So, when data having such the data structure is transmitted to the communication apparatus connected with the toy to be operated on the basis of the operation data, the toy can be operated in accordance with the progress of a scene of a cartoon or the like shown with the contents data.

According to the first and eighth inventions, the data transmission device transmits data to the communication apparatus corresponding to respective identification data stored in a plurality of storage mediums, so the data can be transmitted in accordance with the combination of various storage mediums. Therefore, a possessor of the storage medium can desires to have more other storage media, and the value of each storage medium can be also increased.

Further, according to the second invention, since the storage medium is connected to the communication apparatus via the intermediate connection device, not only the storage medium but also the intermediate connection device influence to identification of the data transmitted from the data transmission device. Therefore, the value of the intermediate connection device can be increased, and a transmitting mode of the data can be diversified.

According to the third invention, since the data transmission device can identify the data to be transmitted on the basis of the table, the burden of the data transmission device for carrying out a processing for identifying the data corresponding to all the received identification data in a plurality of data can be reduced. Further, the speed of the processing can be increased.

According to the fourth and sixth invention, the time from the start of transmitting data by the data transmission device is measured. Further, when the measured time reaches to the predetermined time, the data to be transmitted is changed. So, various transmitting modes of the data can be realized.

According to the fifth invention, when the storage medium is additionally connected later to the communication apparatus which is receiving data, the selection menu data is transmitted to the communication apparatus from the data transmission device. So, the communication apparatus side can select whether the data to be transmitted is changed or not in accordance with the storage medium additionally connected later. Therefore, the data transmission method reflecting the intention of a user who wishes to acquire data can be provided.

According to the seventh invention, when the storage medium is connected, the communication apparatus transmits the position data and the identification data to the data transmission device, and the data transmission device transmits the data, which correspond to the received identification data and relate to a place where the communication apparatus is positioned. Therefore, a possessor of the storage medium can acquire data corresponding to the present position, and the data transmission side can distribute contents and various kinds of information which relates to a limited area.

According to the ninth invention, since the toy which can be operated is connected to the communication apparatus via the intermediate connection device, the data which is accompanied by the operation data is transmitted from the data transmission device to the communication apparatus, where the operation data is for operating the toy in the predetermined scene shown by contents data. Therefore, since each toy can be operated in accordance with a state of progress of a scene shown by the transmitted contents data, a user can be pleased from many aspects by the operation of the toy in addition to the transmitted contents data. Further, when the intermediate connection device can be connected with a plurality of toys, a plurality of toys can be operated by the operation data.

According to the tenth invention, the data transmission device stores a plurality of data having the data structures, which are accompanied by the operation data for operating the toy in the predetermined scene shown by the contents data, and includes the table which defines the data corresponding to the identificationdata. Therefore, data can be transmitted corresponding to the identification data transmitted from the external, and the most suitable data transmission device can be provided to a mode in which the toy which can be operated is connected to the communication apparatus.

According to the eleventh invention, the system has the data structure in which the contents data for showing the predetermined scene of a cartoon or the like where a character appears is accompanied by the operation data for operating the toy. Thereby, the data having such the data structure is transmitted to the communication apparatus connected with the toy, which can be operated on the basis of the operation data, and the toy can be operated in accordance with a state of progress of reproduction of the contents data for showing a scene of a cartoon or the like. Therefore, pleasure given to a user can be enhanced by the operation of the toy in addition to the reproduction of the contents data.

### BRIEF EXPLANATION OF DRAWINGS

Figure 1 is a typical figure illustrating a schematic constitution of a data transmission system according to an embodiment of the present invention.
Figure 2 (a) is a typical perspective view illustrating one example of an appearance of a toy, and Figure 2 (b) is a typical cross sectional view of main parts of the toy.
Figure 3 is a block diagram showing an example of an internal functional constitution of a toy.
Figure 4 (a) is a schematic view illustrating an appearance of an intermediate connection device, and Figure 4 (b) is a block diagram showing an example of an internal functional constitution of the intermediate connection device.
Figure 5 is a block diagram showing an example of an internal functional constitution of a personal computer.
Figure 6 is a block diagram showing an example of an internal functional constitution of a sever.
Figure 7 is a chart showing a content of a data identification table.
Figure 8 (a) is a schematic view of a first menu, and Figure 8 (b) is a schematic view of a second menu.
Figure 9 is a schematic view illustrating a data structure of distribution data.
Figure 10 is a first flowchart showing a whole processing according a data transmission method.
Figure 11 a schematic view illustrating a reproduction of contents data and an operation state of a toy.
Figure 12 is a second flowchart showing a content of process after a time when transmission of distribution data is started.
Figure 13 is a third flowchart showing a process when a new toy is connected.
Figure 14 (a) is a schematic view of a data transmission system according to a variant example, and Figure 14 (b) is a chart showing a content of a data identification table according to the variant example.

### DETAILED DESCRIPTION OF PREFERRED EMBODIMENT

Hereinafter, the present invention is described concretely on the basis of the drawings showing an embodiment thereof.

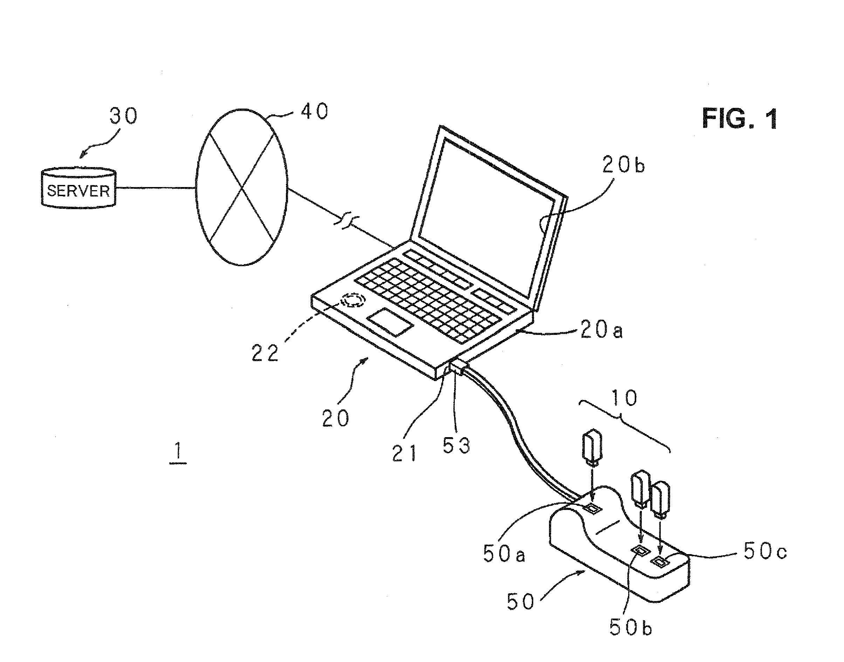

Figure 1 is a typical figure illustrating a schematic structure of a data transmission system 1 according to an embodiment of the present invention. The data transmission system 1 of this embodiment has a constitution, in which a toy 10 being the storage medium is connected to a portable type personal computer 20 (hereinafter, it is referred to as a PC 20) corresponding to the communication apparatus via an intermediate connection device 50. By the above described constitution, a communication connection is established between a specific server 30 (web server or FTP:File Transfer Protocol server) and the PC 20 via a network 40, and the PC 20 can acquire required data corresponding to a combination of the toy 10 connected to the intermediate connection device 50, from the server 30.

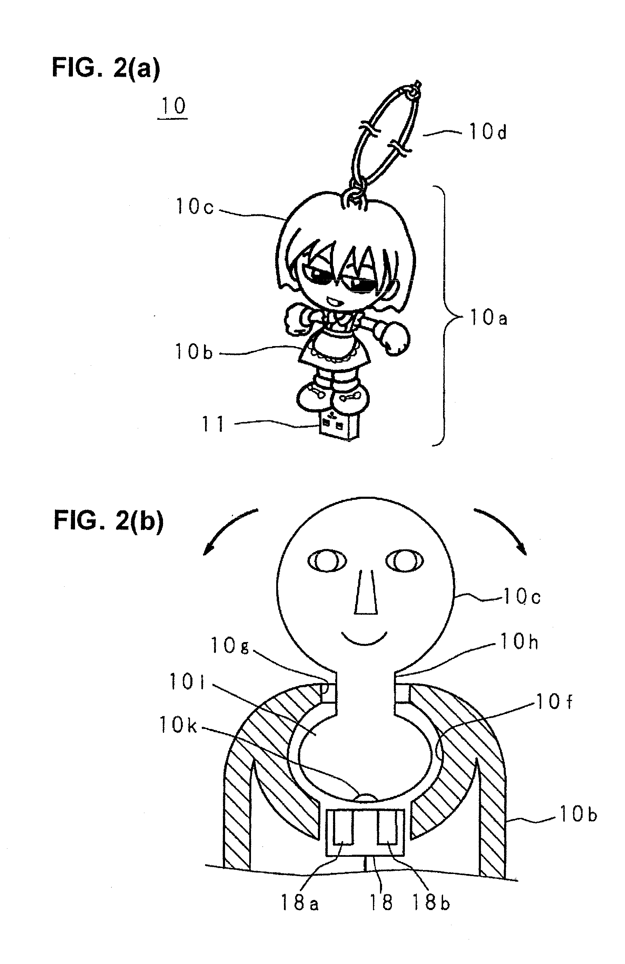

Figure 2 (a) is a typical perspective view illustrating one example of an appearance of the toy 10. In this example, the toy 10 has an appearance as a doll, and is formed to have a doll main body 10a, which is formed by a body part 10b made of a synthetic resin and a head part 10c made of a synthetic resin. The body part 10b has a barrel, arms and legs formed integrally. In addition, the appearance of the toy 10 of Figure 2 (a) is an example, and the appearance of the doll can be changed to have another shape. For example, the appearance can have a shape of a character which appears in a cartoon, an animation, a game or a movie, and further, a shape of a vehicle such as an automobile, an airplane or the like, a building, an animal, or the like. Further, the toy 10 has a connection terminal unit 11 corresponding to a specification of USB (Universal Serial Bus) projecting from the foots of the body part 10b, and the head part 10c is attached with a strap 10d.

As for the toy 10, the head part 10c is movably mounted on the body part 10b, as illustrated in Figure 2 (b) . The body part 10b has a recessed part 10f inside an opening 10g formed on the side on which the head part 10c is mounted. On the other hand, the head part 10c has a neck part 10h downwardly projected. Further, the neck part 10h has a spherical rotary part 10i at an end part thereof, and the rotary part 10i is rotatably put in the recessed part 10f. Thereby, the toy 10 can carry out a mechanical action, for instance, the head part 10c can be shaken in the front, rear, left and right directions with respect to the body part 10b. In addition, a lower end part of the rotary part 10i of the head part 10c has a metal piece 10k. On the other hand, a driving unit 18 having a plurality of electromagnetic coils 18a, 18b is provided at a part facing the lower end part of the rotary part 10i in the recessed part 10f of the body part 10b. Therefore, when the electromagnetic coils 18a, 18b of the driving unit 18 are controlled and excited as described below, a neck shaking operation of the head part 10c can be carried out.

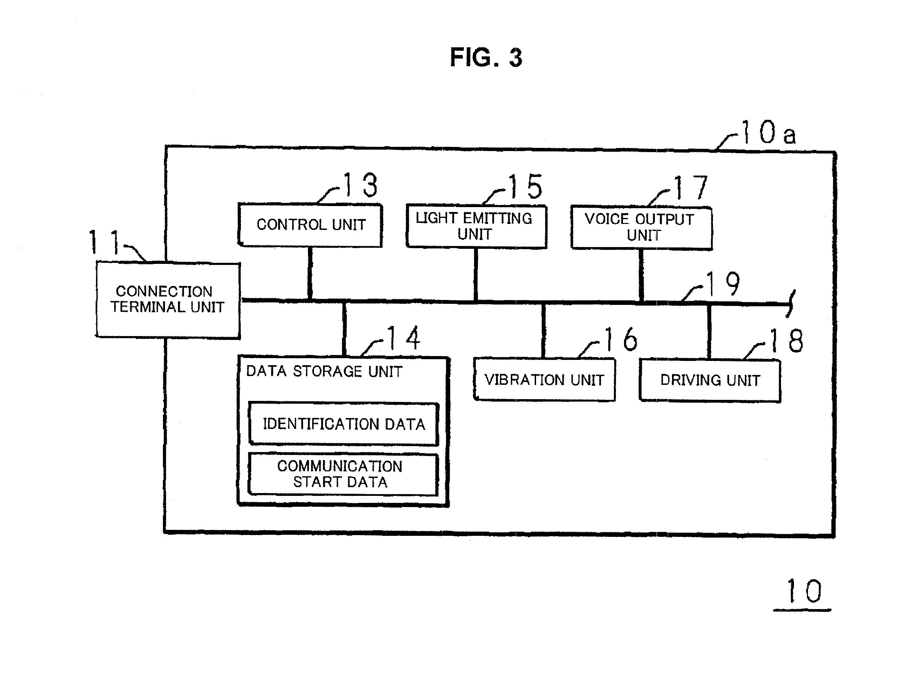

Figure 3 is a block diagram showing an example of an internal functional constitution of the toy 10. The toy 10 has a control unit 13, a data storage unit 14; a light emitting unit 15 formed with a light emitting diode; a vibration unit 16 using a vibration element; a voice output unit 17 generating plural kinds of electronic sounds; and the above-described driving unit 18, at the inside of the doll main body 10a. Each of the units 13 to 18 is connected to an internal bus 19 for transmitting data, which is extended from the connection terminal unit 11. In addition, the light emitting unit 15 is mounted so as to be seen from the external of the toy 10. The light emitting unit 15, the vibration unit 16, the voice output unit 17 and the driving unit 18 are for light-emitting, vibrating, outputting a voice, and driving to shake a neck of the head part 10c as an operation unit. Further, although it is not illustrated in the drawings, the toy 10 has power supply lines extended to each of the units 13 to 18 from the connection terminal unit 11. Therefore, when the connection terminal unit 11 is connected with an apparatus like the PC 20 illustrated in Figure 1, electric power is supplied from the connected apparatus to each of the units 13 to 18.

The control unit 13 controls various kinds of processings to each of the units 14 to 18. For example, when the toy 10 is connected to the communication apparatus, the control unit 13 controls the data storage unit 14 for outputting the stored data in order that the communication apparatus can read out the data, and carries out a processing of an address designation and a synchronization control for making the data storage unit 14 to store data received from the external.

The control unit 13 controls the light emitting unit 15, the vibration unit 16, the voice output unit 17 and the driving unit 18, for operating these units on the basis of operation data received from the external via the connection terminal unit 11. For example, when the toy 10 accepts light emitting data for operating the light emitting unit 15 as the operation data from the external, the control unit 13 transmit the light emitting data to the light emitting unit 15 so as to operate the light emitting unit 15. Similarly, when the toy 10 accepts vibration data as the operation data, the control unit 13 transmits the vibration data to the vibration unit 16 so as to operate the vibration unit 16. When the toy 10 accepts voice data, the control unit 13 transmits the voice data to the voice output unit 17 so as to output the voice from the voice output unit 17. When the toy 10 accepts driving data, the control unit 13 transmits the driving data to the driving unit 18, and suitably excites each of the electromagnetic coils 18a, 18b of the driving unit 18, so as to shake the neck of the head part 10c.

Further, a semiconductor memory is used for the storage unit 14 of the toy 10 in this embodiment, and identification data and communication start data are pre-stored in this memory. The identification data are data corresponding to an individual number of the toy in order to identify the toy 10 from other toys, and in this embodiment, a number such as "100", "101" or the like is used. Thereby, only one toy 10 storing the identification data of "100" in the data storage unit 14 exists in the world, and only one toy 10 storing the identification data of "101" in the data storage unit 14 exists in the world too.

The communication start data stored in the data storage unit 14 is automatic starting type program data in which contents for starting a communication processing of the communication apparatus with which the toy 10 is connected is defined. In the communication start data in this embodiment, the URL (Uniform Resource Locator) of the web page, which a server 30 illustrated in Figure 1 has, is defined as an apparatus to be connected for the communication. By defining the URL of the web page as described above, when the communication apparatus, with which the toy 10 is to be connected, established the communication connection with the server 30 via a server of a provider (not illustrated in the drawings) and the network 40, a processing for accessing to the predetermined Web page of the server 30 is defined. In addition, the data storage unit 14 keeps the free space capable of storing data other than the identification data and the communication start data. Incorporating the date storage medium 14 enables the toy 10 to function as the storage medium.

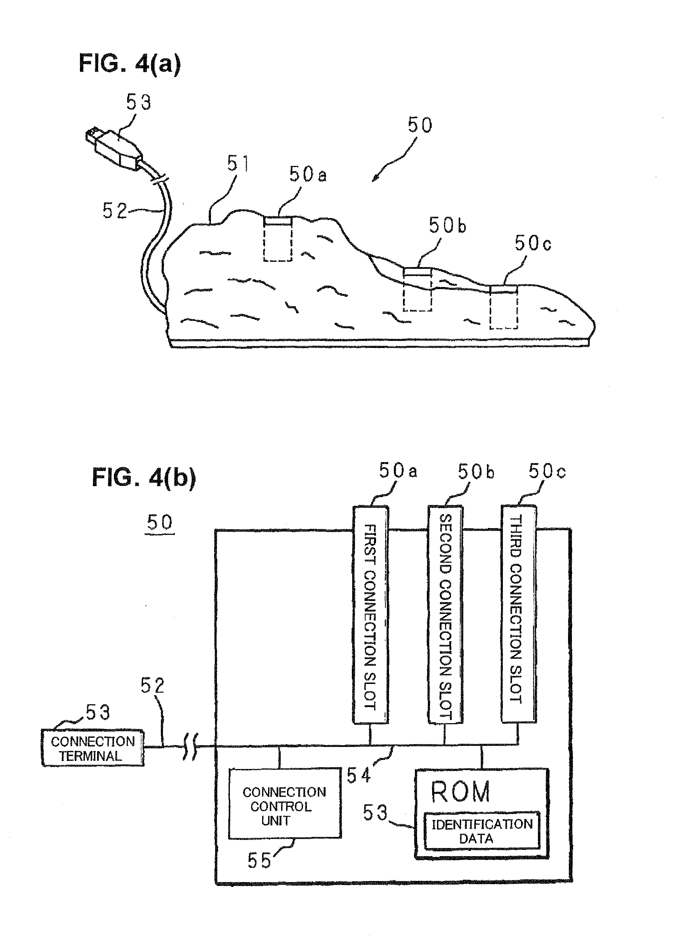

Further, the intermediate connection device 50 illustrated in Figures 1 and 4 (a) has a function as a USB hub. In this embodiment, the intermediate connection device 50 has three connection slots 50a, 50b and 50c, so that the intermediate connection device 50 can be simultaneously connected with three toys 10 at the maximum. Further, in this embodiment, the intermediate connection device 50 has a casing 51 formed in a shape like an islet. Thereby, when the toy 10 is connected to each of the connection slots 50a to 50c, the intermediate connection device 50 can make an atmosphere in which the toy 10 has landed on an islet. In addition, a cord 52 having a connection terminal 53 corresponding to the USB specification at a terminal thereof is projected from the intermediate connection device 50.

Figure4 (b) is a block diagram showing an example of an internal functional constitution of the intermediate connection device 50. The inside of the intermediate connection device 50 has a constitution in which a first connection slot 50a the second connection slot 50b and a third connection slot 50c are connected with an internal bus 54, and a ROM 53 and a connection control unit 55 are also connected with the internal bus 54. Further, the internal bus 54 is connected to the connection terminal 53 via the cord 52. Thereby, when the toy 10 is connected to the connection slots 50a, 50b and 50c, the connection control unit 55 controls to establish the connection so as to transmit and receive data between the toys 10 and an apparatus with which the connection terminal 53 is to be connected. The ROM 53 stores the specific identification data for identifying the intermediate connection device 50, and the number of "103" is stored in this embodiment.

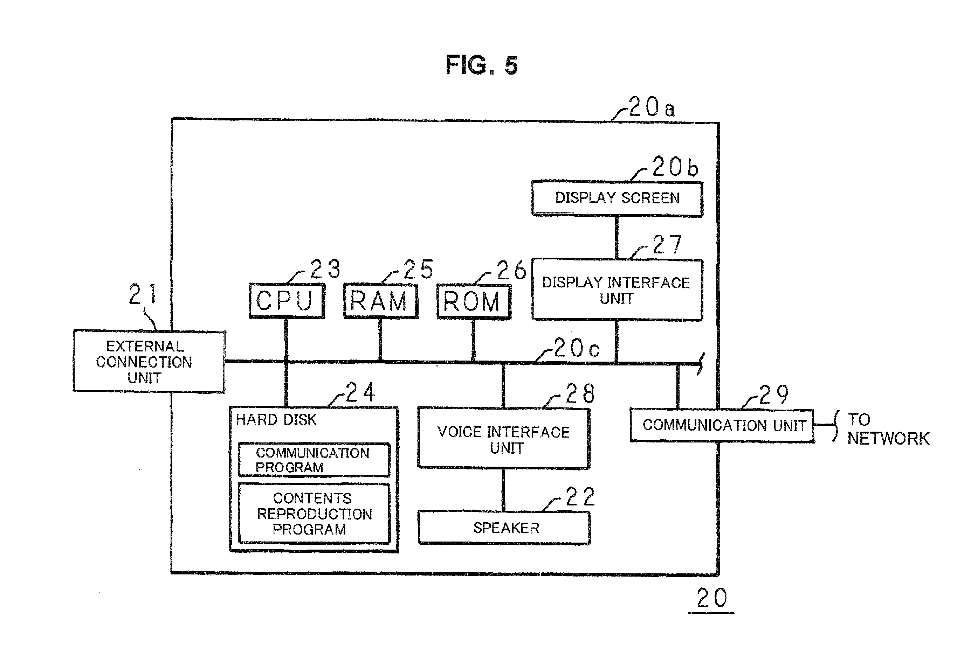

Further, Figure 5 is a block diagram showing an example of an internal functional constitution of the PC 20 connected with the intermediate connection device 50. As for the PC 20, an internal bus 20c for PC is connected to an external connection unit 21, which corresponds to the USB specification and is provided on one side of the casing 20a, as illustrated in Figure 1. Further, the PC 20 has a constitution in which the internal bus 20c for PC is connected with a CPU 23, a hard disk 24, a RAM 25, a ROM 26, a display interface unit 27, a voice interface unit 28 and a communication unit 29. In addition, the PC 20 has power supply lines (not illustrated in the drawings) for supplying electric power to each of the units from 21 to 29, where these power supply lines are connected with an external commercial power source. Thereby, electric power can be supplied to the apparatus connected with the external connection unit 21.

The hard disk 24 is provided for storing various kinds of data and programs. In this embodiment, the hard disk 24 stores a communication program, a contents reproduction program, and the like besides a program relating to an operating system and various kinds of application programs;. Each program stored in the hard disk 24 is for defining processings which are carried out by the CPU 23.

The communication program is a program for a processing for connecting to a server 30 of a provider, which is a communication destination of the PC 20, according to a pre-set communication protocol, and a processing for accessing to various kinds of servers connected with the network 40 via this provider. A general communication program has a constitution in which the PC 20 accepts an operation of a user so as to make the CPU 23 to carry out the above-described communications processings. However, the communication program in this embodiment is started by the communication start data stored in the toy 10 connected to the PC 20 so as to establish the communication connection with the server 30. Further, in the communication program, the CPU 23 automatically carries out a processing for reading out the identification data stored in all the toys 10 and the intermediate connection device 50, which are connected to the PC 20, and for transmitting the read-out identification data to the server 30.

Further, the contents reproduction program is a program for processing to reproduce by PC 20 the contents data included in the distribution data transmitted from the server 30, as described below. The contents data includes data relating to an image and data relating to a voice. The contents reproduction program defines a processing for making a display screen 20b of the PC 20 to display the data relating to an image, and a processing for outputting the data relating to a voice from a speaker 22 of the PC 20. Further, the distribution data transmitted from the server 30 includes operation data such as light emitting data, vibration data, voice data, driving data and the like, as described below. Therefore, the contents reproduction program defines that the CPU 23 is made to carry out a processing for outputting the operation data from the external connection unit 21 to the toy 10 via the intermediate connection device 50.

The CPU 23 functions as a detection means for detecting whether the toy 10 is connected to the external connection unit 21 or the intermediate connection device 50 on the basis of each program stored in the hard disk 24 or the ROM 26. Further, when detecting that the toy 10 is connected, the CPU 23 functions as a reading out means for reading out in addition to the identification data and stored in the intermediate connection device 50 the communication start data and the identification data stored in the toy 10.

Further, especially when detecting that a plurality of toys 10 are connected, the CPU 23 carries out a processing for reading out the communication start data from the toy 10 connected to the first connection slot 50a or the second connection slot 50b in the intermediate connection device 50, and for reading out the identification data from all the toys 10 connected to the intermediate connection device 50 and the intermediate connection device 50 respectively. In addition, when the toy 10 is additionally connected later to a free connection slot in the intermediate connection device 50 in a state where the toy 10 is already connected to any one of connections slots of the intermediate connection device 50, the CPU 23 carried out a processing for reading out the identification data of the toy 10 additionally connected later. Furthermore, the CPU 23 functions as a transmission means for starting the communication program on the basis of the read-out communication start data, and transmitting all the read-out identification data and the identification data read out later to the server 30.

Further, when receiving various kinds of menu data from the server 30 as described below, the CPU 23 carries out a processing for making the display screen 20b to display the received menu data, and carries out processings for accepting an instruction of a user by an input selecting means, such as a keyboard, a mouse (not illustrated in the drawings) or the like, in the displayed menu, and transmitting the accepted instruction to the server 30.

In addition, as for the other units of the PC 20, for example, the display interface unit 27 carries out a processing for making the display screen 20b to display the data accepted via the internal bus 20c for PC, and the voice interface unit 28 carries out a processing for outputting the data accepted via the internal bus 20c for PC as a voice from the speaker 22. Further, the communication unit 29 is provided for carrying out a communication process, and connected with a communication cable for communicating with the network 40 such as Internet. The RAM 25 is temporarily stores various kinds of data generated in the processing by the CPU 23, and the ROM 26 stores various kinds of programs and data.

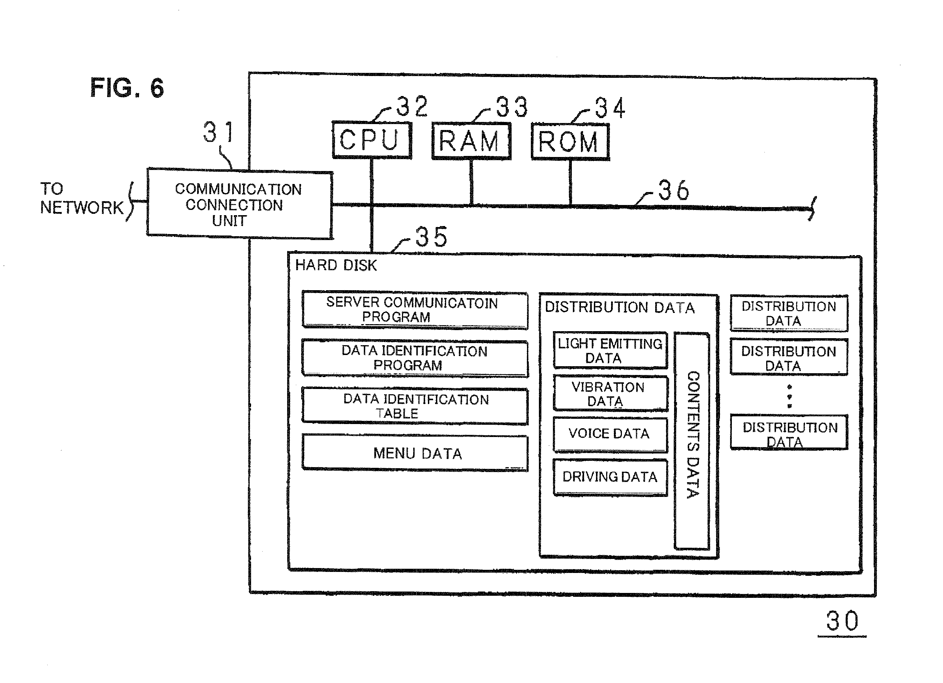

Figure 6 is a block diagram showing an example of an internal functional constitution of the server 30 corresponding to the data transmission device. The server 30 is a data transmission device for transmitting the distribution data relating to the toy 10, and a server computer is used. The server 30 has a constitution in which an internal bus 36 for server is connected with a communication connection unit 31, a CPU 32, a RAM 33, a ROM 34 and a hard disk 35 corresponding to a storage unit. The communication connection unit 31 is connected to the network 40, and is for carrying out a processing for transmitting and receiving various kinds of data. Further, the RAM 33 temporarily stores various kinds of data generated in the processing by the CPU 32, and the ROM 34 stores required data or the like.

The hard disk 35 stores various kinds of programs, tables, data and the like. Moreparticularly, in this embodiment, the hard disk 35 stores a data identification table, menu data, and many kinds of distribution data in addition to a server communication program and a data identification program, in processings carried out by the CPU 32.

The server communication program defines a processing for receiving all identification data and various kinds of instructions from the external access device, and a processing for transmitting distribution data and various kinds of menu data to the access device. By the server communication program, the CPU 32 functions as the data transmission means for transmitting the distribution data.

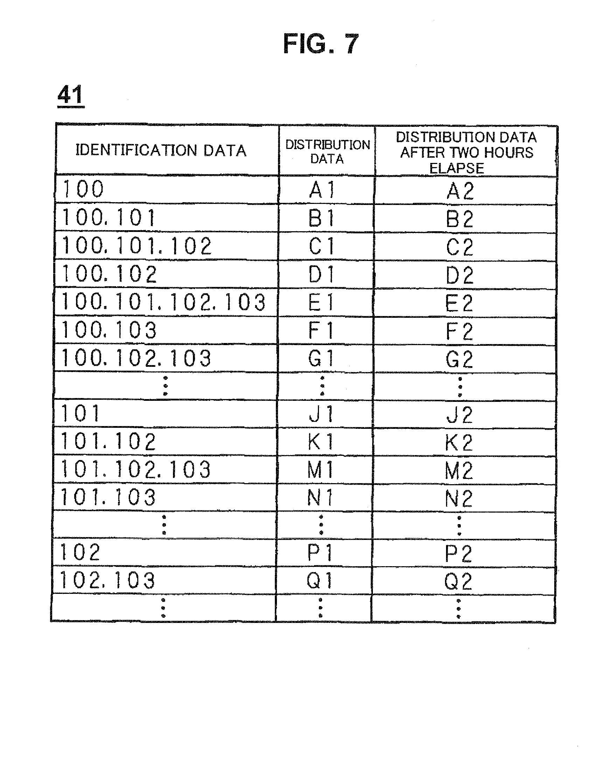

The data identification program defines a processing for identifying the distribution data corresponding to all identification data which is received from the access device by the server 30, in the many kinds of distribution data stored in the hard disk 35, where the distribution data is identified on the basis of a data identification table 41 shown in Figure 7. That is, the data identification table 41 defines a kind of the distribution data corresponding to the identification data which is received by the server 30. For example, when the server 30 receives the identification data being a set of "100" and "102", the CPU 32 specifies the distribution data of "D1" on the basis of the data identification table 41.

In addition, the data identification table 41 shown in Figure 7 defines the distribution data corresponding to one identification data. Thereby, when the toy 10 is directly connected to the PC 20 without using the intermediate connection device 50, the distribution data can be specified in accordance with one identification data which the server 30 received.

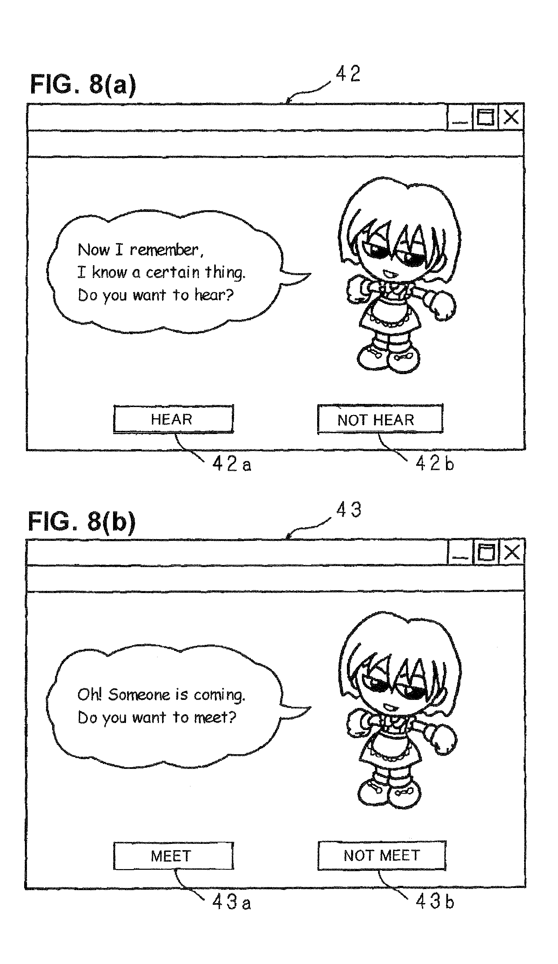

Further, the data identification program defines a processing for making the CPU 32 to measure the time required for transmitting the identified distribution data (the elapsed time from the start of transmitting), and for transmitting menu data, which is for displaying a first menu 42 shown in Figure 8 (a), when the measured time reaches to the predetermined time (two hours in this embodiment). Further, the data identification program defines the content of the processing which is for identifying the distribution data to be changed on the basis of the data identification table 41 shown in Figure 7 when the server 30 receives an instruction for changing the distribution data from the access device with respect to the first menu data 42 shown in Figure 8 (a). That is, the data identification table 41 defines a kind of the distribution data after two hours elapse corresponding to the respective identification data. Therefore, when the server 30 receives an instruction for changing the distribution data from the access device after transmitting the distribution data of "D1" for two hours by receiving the identification data of "100" and "102", the CPU 32 identifies "D2" as the distribution data to be changed according to the data identification table 41.

Further, the data identification program defines a processing for transmitting menu data for displaying second menu 43 shown in Figure 8 (b) to the access device, when the server 30 receives new identification data later from the same access device in the state where the distribution data is once identified corresponding to all the received identification data.

Furthermore, the data identification program defines a processing for identifying the distribution data corresponding to the combination of the all identification data including the identification data received later, where the distribution data is identified on the basis of the data identification table 41 shown in Figure 7, when the server 30 receives the instruction for changing the distribution data from the access device with respect to the second menu data 43 shown in Figure 8 (b). More particularly, when the server 30 receives the identification data "102" and the instruction for changing the distribution data with respect to the second menu 43 shown in Figure 8 while the server 30 is transmitting the distribution data of "B1" by receiving the identification data of "100" and "101" at first, the CPU 32 carries out a processing for identifying the distribution data of "C1" corresponding to the identification data of "100", "101" and "102", on the basis of the data identification table 41.

In addition, the menu data for displaying the first menu 42 shown in Figure 8 (a) have a constitution in which a box 42a of "HEAR" and a box 42b of "NOT THEAR" in the first menu 42 can be clicked (selected) . When the box 42a of "HEAR" is clicked, the instruction for changing the distribution data is transmitted, and when the box 42b of "NOT HEAR" is clicked, the instruction for not changing the distribution data is transmitted. Therefore, a user can select whether a kind of the distribution data to be transmitted is changed or not, by the first menu 42 displayed when two hours elapse after receiving the distribution data.

Further, the menu data for displaying the second menu 43 shown in Figure 8 (b) have a constitution in which a box 43a of "MEET" and a box 43b of "NOT MEET" can be clicked (selected), like the first menu 42. When the box 43a of "MEET" is clicked, the instruction for changing the distribution data is transmitted, and when the box 43b of "NOT MEET" is clicked, the instruction for not changing the distribution data is transmitted. Therefore, when the new toy 10 is connected, a user can select whether a kind of the distribution data to be transmitted is changed or not, by the second menu 43.

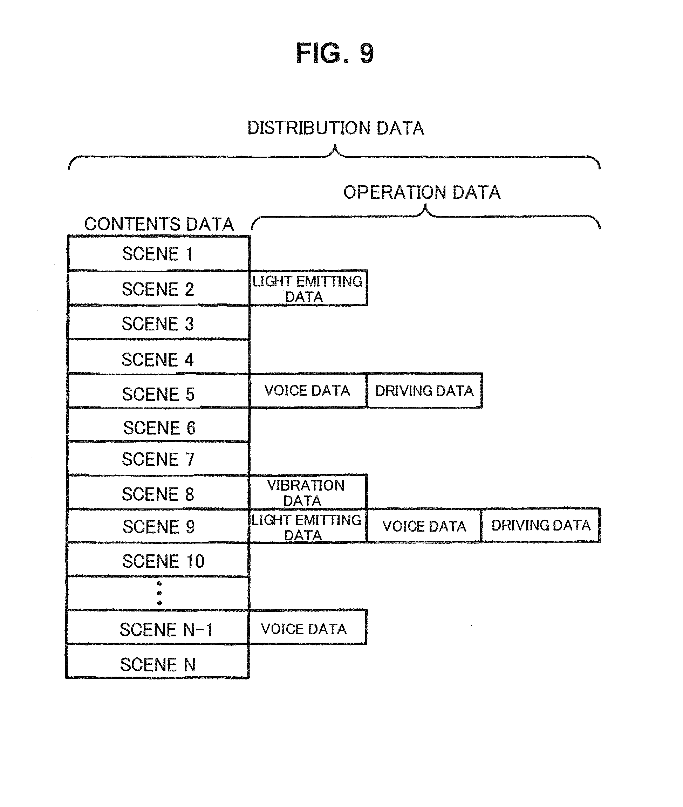

Figure 9 is one example showing a data structure of distribution data, many kinds of which are stored in the hard disk 35 of the server 30. The distribution data has a structure in which contents data and operation data is combined. The contents data has a constitution in which data for reproducing the first scene 1 to the last scene N (N is an integer) are linked. These scenes from 1 to N constitute respective scenes relating to a cartoon, an animation, a game, a movie, a demonstration image of a software, a help guide of a soft ware or the like, in which a character relating to a doll of the toy 10 appears. In addition, the voice data are included in accordance with a kind and content of the contents in respective scenes of the contents data, in addition to image data.

Further, the operation data include the light-emitting data, the voice data, the vibration data, and the driving data, where these data are for operating the light-emitting unit 15 of the toy 10 shown in Figure 3, the vibration unit 16 using the vibration element, the voice output unit 17 generating plural kinds of electronic sounds, and the driving unit 18 respectively. The light emitting data, the voice data and the like accompanies many scenes corresponding to the action of a character, with respect to many scenes 1 to N in the contents data. For example, the scene 2 of the contents data has the content in which a character is pleased, and the light emitting data accompanies as the operation data. When the PC 20 receives and reproduces such the distribution data, an image corresponding to the scene 2 having the content in which a character is pleased is displayed on the display screen 20b, the light emitting unit 15 is emitted at the toy 10 connected to the intermediate connection device 50 so as to display the state where the toy 10 is pleased and lighted. As described above, the toy 10 can be operated so as to show various emotions corresponding to the content of the reproduced contents.

The distribution data had many kinds such as A1, B1, ···A2, B2··· as shown in the data identification table 41 in Figure 7. In this embodiment, a character of the toy 10 corresponding to the identification data appears in the contents of the distribution data corresponding to the identification data. Therefore, the distribution data of "B1" have the content in which a character of the toy 10 having the identification data of "100" and a character of the toy 10 having the identification data of "101" appear, and a possessor of the toy 10 can acquire kinds of the distribution data corresponding to the combination of the toy 10 which the possessor himself has. In addition, in this embodiment, the intermediate connection device 50 has the identification data of "103", so that the contents of the distribution data of "E1", "F1", etc. corresponding to "103" have the content in which respective characters appear under a special background or situation. Thereby, the significance of the existence of the intermediate connection device 50 can be enhanced.

Further, the contents data included in the distribution data in this embodiment basically have a content of 2 or more hours, and a story can be branched to another story when two hours elapse. Therefore, in the data identification table 41 shown in Figure 7, the distribution data of "A2", "B2" or the like corresponding to the branched contents data are defined as "the distribution data after two hours elapse".

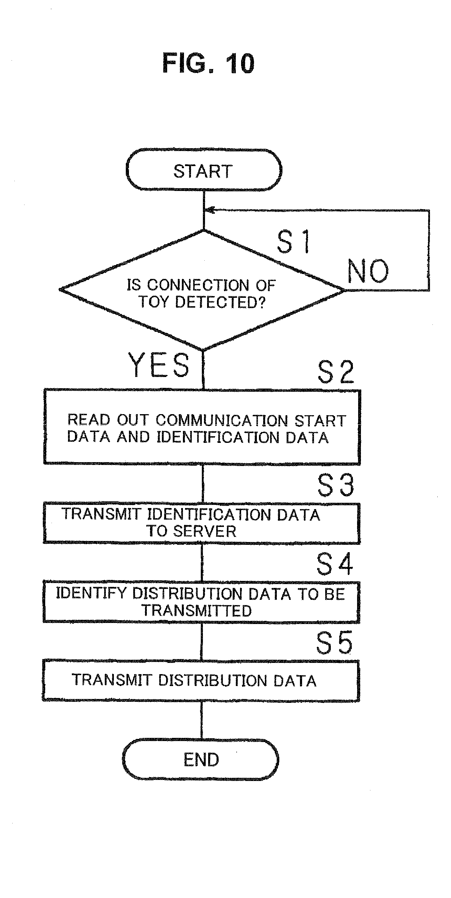

A total flow of a processing in the data transmission method by the data transmission system 1 having the above-described constitution is described on the basis of a first flowchart shown in Figure 10.

The PC 20 connected with the intermediate connection device 50 detects whether the toy 10 is connected to the intermediate connection device 50 or not (S1). When connection of the toy 10 is not detected (S1:NO), the PC 20 is in a standby state for the connection of the toy 10. When the connection of the toy 10 is detected (S1:YES), the PC 20 reads out the communication start data from the toy 10 connected to the intermediate connection device 50, and reads out the identification data of all the connected toys 10 and the identification data of the intermediate connection device 50 (S2). Then, the PC 20 establishes the communication connection to the server 30 by the communication program which has been started by the communication start data, and transmits all the identification data to the server 30 (S3).

On the other hand, the server 30 identifies the distribution data corresponding to the combination of all the transmitted identification data on the basis of the data identification table 41 (S4), and transmits the identified distribution data to the PC 20 (S5). Thereby, the PC 20 sequentially reproduces the contents data included in the transmitted distribution data, and transmits the operation data to the connected respective toys 10 when the operation data accompanies a scene of the contents data to be reproduced. By such the processing of the PC 20, one or a plurality of toys 10 can be operated in accordance with the reproduction of the contents data independently whether the toy 10 is one or plural. As described above, in the present invention, various distribution data can be obtained in accordance with the combination of the toys 10, so a possessor can be made to have strong desire of collecting more toys 10. Further, the intermediate connection device 50 relates to a kind of the distribution data which can be obtained, so a possessor can be made to have desire to get not only the toy 10 but also the intermediate connection device 50. In addition, in the present invention, an embodiment in which the distribution data can be collectively transmitted as a whole from the server 30 can be applied, in addition to the embodiment in which the distribution data is sequentially transmitted.

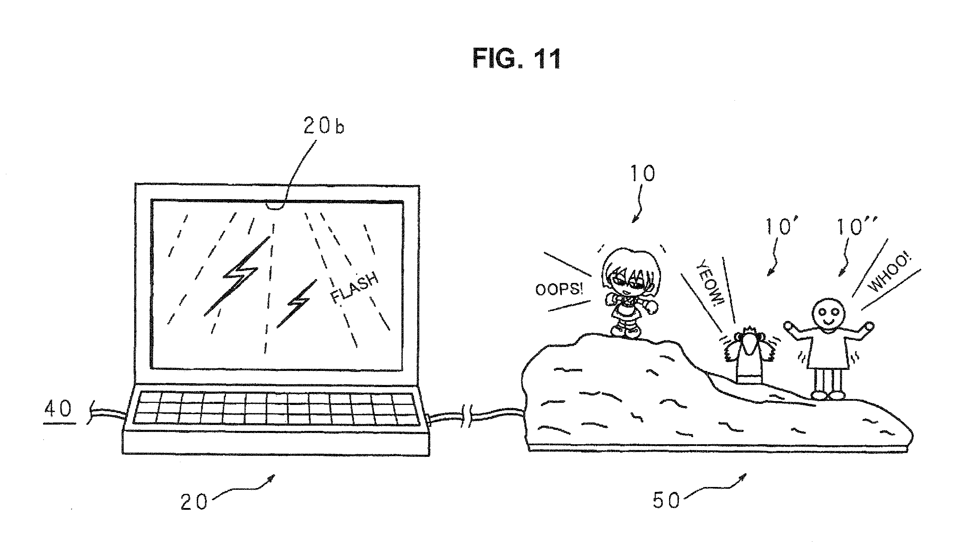

Figure 11 is a schematic view illustrating a situation in which the PC 20 reproduces the distribution data in a state of three toys 10, 10' and 10" in different shapes being connected to the intermediate connection device 50. The PC 20 displays and reproduces one scene included in the contents data, where it thunders, on the display screen 20b. At this time, the respective toys 10, 10' and 10" vibrate and output the voice of "Oops!", "Oh my god!" or the like by the voice data and the vibration data which accompanies the scene where it thunders, and express the look of being surprised by the thunder. As a result of this, a possessor of the respective toys 10, 10' and 10" can enjoy the distribution data transmitted from the server 30 from various viewpoints with the operation of the respective toys 10, 10' and 10".

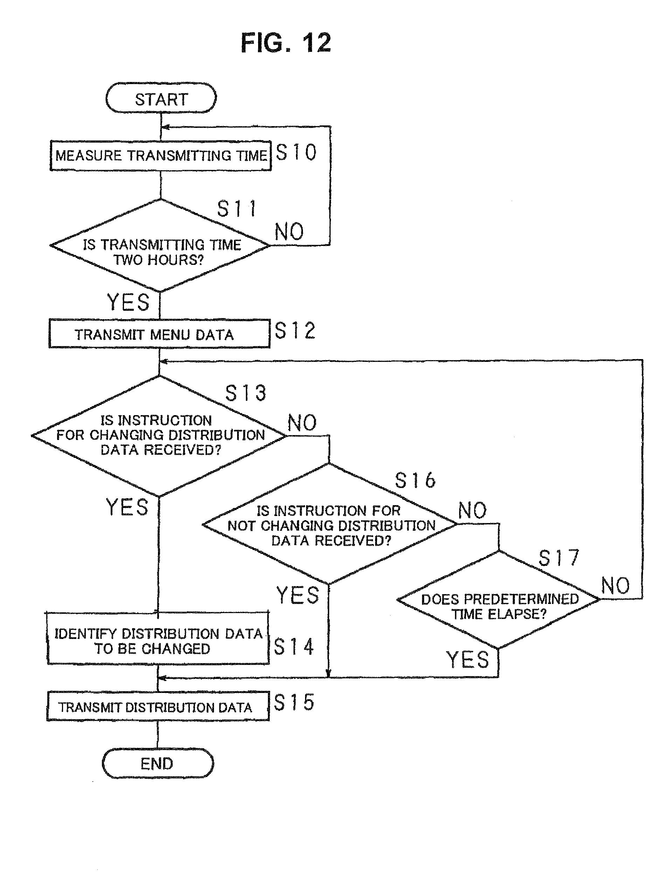

A second flowchart in Figure 12 shows the process after a time point when the server 30 starts transmitting the distribution data.

The server 30 starts measuring the transmission time at the time when starting transmitting the distribution data (S10) , and determines whether the transmission time reaches to two hours or not (S11) . When the transmission time does not reach to two hours (S11:NO), the server 30 returns to a step of measuring the transmission time and continues measuring (S10) . When the transmission time reaches to two hours (S11:YES) , the server 30 once stops transmitting the distribution data, and transmits the menu data for displaying the first menu 42 shown in Figure 8 (a) to the PC 20 which is the transmitting destination of the distribution data (S12). When receiving the above-described menu data, the PC 20 displays the first menu 42 on the display screen 20b as illustrated in Figure 8 (a). Then, the PC 20 accepts the instruction for changing or not changing the distribution data, and transmits it to the server 30, where the instruction is determined by clicking any one of the box 42a of "HEAR" and the box 42b of "DON'T HEAR" by a user.

Then, the server 30 determines whether the instruction for changing or not changing the distribution data is received or not from the PC 20 within the predetermined time (for example, within about 5 minutes) (S13:NO, S16:NO, S17:NO). When the instruction for changing the distribution data is received with in the predetermined time (S13:YES), the server 30 identifies a kind of the distribution data to be distributed after two hours elapse on the basis of the data identification table 41 (S14), and transmits the identified distribution data to the PC 20 (S15). Further, when the instruction for not changing the distribution data is received (S13:NO, S16:YES), and when the predetermined time elapses without receiving any instructions (S13:NO, S16:NO, S17:YES), the server 30 resumes transmission of the distribution data of which transmission has been suspended (S15). As described above, the server 30 changes the distribution data to be transmitted, corresponding to the elapsed time (the transmission time) from the start of transmitting the distribution data, where the distribution data is changed on the basis of the determination of a user, so even when the data is transmitted for a long time, it is possible to continue to attract the user's interest.

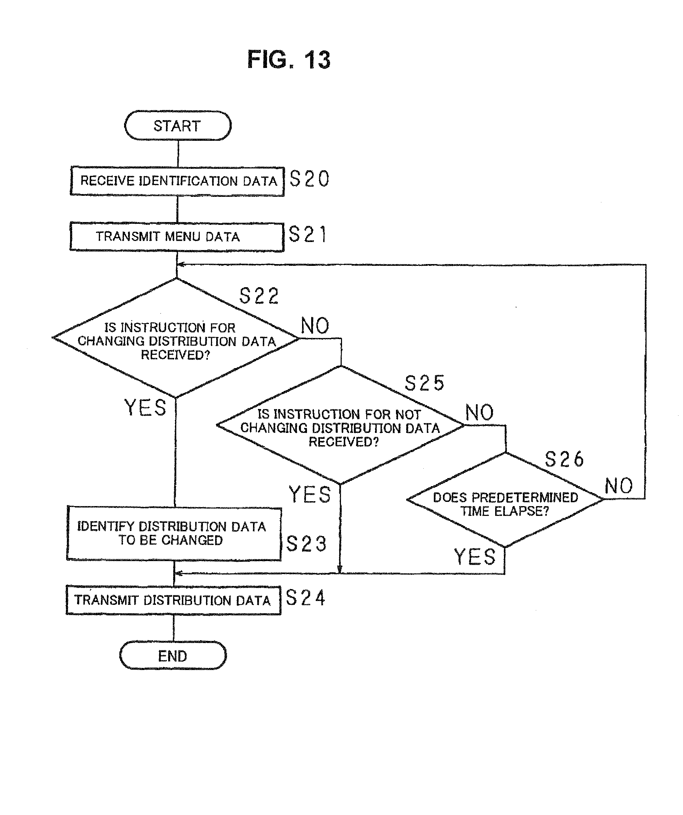

A third flowchart in Figure 13 shows the content of a processing of the server 30 when the toy 10 is additionally connected later to a free connection slot of the intermediate connection device 50. More particularly, the flowchart shows a processing of the server 30 when the new toy 10 is connected to the intermediate connection device 50 in the state where two toys 10 are already connected to the intermediate connection device 50 and the distribution data is transmitted, and, the identification data of the new toy 10 is transmitted from the PC 20 to the server 30.

When the server 30 receives new identification data from the PC 20 which is the transmitting destination of the distribution data (S20), the server 30 once stops transmitting the distribution data, and transmits the menu data for displaying the second menu 43 shown in Figure 8 (b) to the PC 20 (S21). When the menu data is transmitted, the PC 20 displays the second menu 43 on the display screen 20b as shown in Figure 8 (b), and transmits the instruction for changing or not changing the distribution data to the server 30, where the instruction is determined by clicking any one of the box 43a of "MEET" and the box 43b of "NOT MEET" by a user.

Then, the server 30 determines whether the instruction for changing or not changing the distribution data is received or not from the PC 20 within the predetermined time (for example, within about 5 minutes) (S22:NO, S25:NO, 826:NO). When the instruction for changing the distribution data is received within the predetermined time (S22:YES), the server 30 identifies a kind of the distribution data corresponding to the combination of new identification data to be distributed on the basis of the data identification table 41 (S23), and transmits the identified distribution data to the PC 20 (S24). Further, when the instruction for not changing the distribution data is received (S22:NO, S25:YES), and when the predetermined time elapses without receiving any instructions (S22:NO, S25:NO, S26:YES), the server 30 resumes transmission of the distribution data which has been suspended (S24). As described above, when the new toy 10 is additionally connected later, the server 30 changes the distribution data corresponding to the new toy 10 even while transmitting the distribution data. So, the distribution data can be transmitted flexibly corresponding to various using states.

In addition, the data-transmission system 1 and the data transmission methods described in reference to respective flowcharts are not limited to the above-described concrete examples, and various variant examples can be applied. For example, the intermediate connection device 50 may have the operation unit operated on the basis of the operation data, like the toy 10 so as to be operated according to the operation data. On the other hand, when a constitution of the system is required to be simplified, a structure for operating the toy 10 may be omitted, and the shape thereof may be simplified. In this case, the data structure may be made such that the distribution data is not accompanied by the operation data. Further, when the PC 20 has a pluralityof external connectionunits 21, a plurality of toys 10 may directly connect to the external connection units 21 of the PC 20, so that the intermediate connection device 50 is not necessary. Further, as the communication apparatus, an apparatus having a function which enables to communicate with the network 40 by a cable or radio can be used instead of the PC 20. For example, a stationary computer, a PDA, a PHS communication apparatus, a cellular phone or the like can be used. As for the connection specification between the PC 20 (the communication apparatus), the intermediate connection device 50 and the toy 10, for example, another serial connection specification like the IEEE1394 or a specialized connection specification can be applied in addition to the above-described USB. However, when the USB is used, electric power can be supplied, but when the other connection specification is applied, supplying the electric power must be considered separately.

Further, the following constitution is conceivable. The server 30 does not specify the distribution data but the intermediate connection device 50 or the PC 20 specifies the distribution data in accordance with the combination of the toys 10. In this case, a processing unit is separately provided at the intermediate connection device 50 or the PC 20, where the processing unit is for storing a table like the data identification table 41 shown in Figure 7, and for carrying out a processing for specifying the distribution data. Further, the processing unit identifies a kind of distribution data corresponding to the combination of the identification data of the connected toy 10 and the identification data of the intermediate connection device 50, and the instruction for requesting the identified kind of the distribution data is transmitted to the server 30 from the PC 20. In this case, when receiving the instruction for requesting the distribution data, the server 30 reads out a kind of the distribution data corresponding to the instruction from a hard disk 35, and transmits it to the PC 20.

Further, following constitution is also conceivable. The server 30 omits a processing for transmitting the menu data of respective menus 42 and 43 in the second flowchart and the third flowchart, and when the transmitting time reaches to the predetermined time (two hours) or the new identification data is received, the server 30 automatically changes a kind of the distribution data to be transmitted. Further, the server 30 may more minutely set the time of changing a kind of the distribution data to be transmitted, corresponding to the transmitting time of the data. In addition, as an example of application of the present invention, the following mode can be considered. The toy 10 is sold as a substitute of a ticket of an entertainment such as a concert, an event or the like, and the toy 10 is used until the entertainment being held, so as to transmit distribution data including various information relating to the entertainment to a buyer of the toy 10. Further, as to the toy 10 can make the data storage unit 14 may store the distribution data which the PC 20 received, and the data storage unit 14 may also pre-store the contents data. In this case, even when the PC 20 does not establish the communication connection to the server 30 due to various reasons such as a communication trouble or the like, various stored in the toy 10 itself can be reproduced in the PC 20.

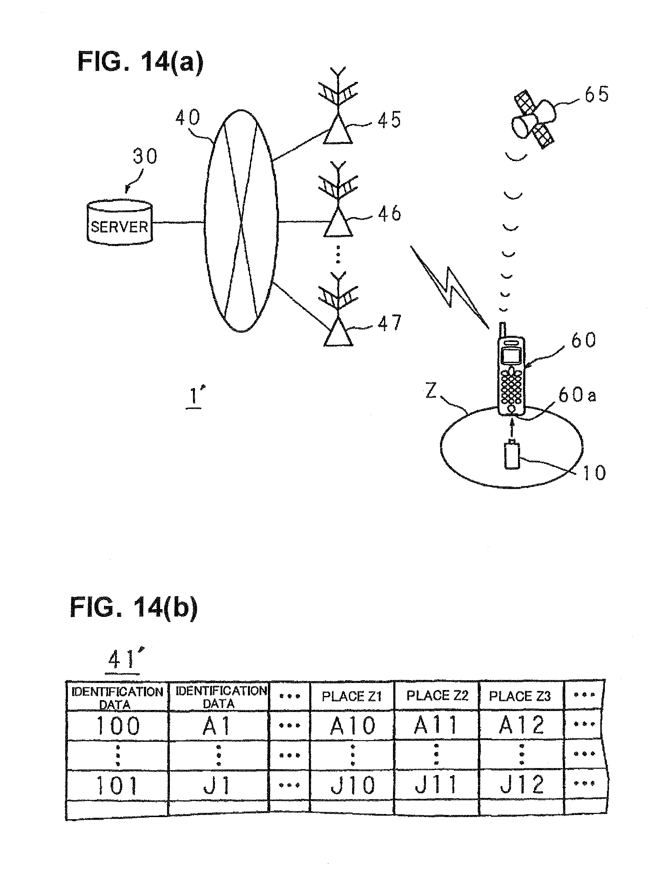

Further, Figure 14 (a) shows a schematic illustration of a data transmission system 1' according to one variant example of an embodiment of the present invention. An aspect of the data transmission system 1' being the variant example is as follows. A cellular phone 60 corresponding to the communication apparatus detects a present position Z by the GPS (Global Positioning System) using an artificial satellite 65; transmits position data relating to the detected position Z to the server 30; and acquires distribution data corresponding to the position Z. A basic internal constitution of the cellular phone 60 is based on the PC 20 in Figure 5 except a position detection unit using the GPS is provided. That is, the cellular phone 60 has an external connection unit 60a capable of being directly connected to the toy 10, a memory unit for storing communication program and a contents reproduction program instead of the hard disk 24, and a radio communication unit instead of the communication unit 29. Further, the communication program stored in the cellular phone 60 defines that, when the toy 10 is connected to the external connection unit 60a, the present position is detected by the built-in position detection unit, position data relating to the longitude-latitude showing the detected position is generated, and the position data is transmitted to the server 30 via relay base stations 45, 46 and 47 of the network 40.

Figure 14 (b) shows the content of a data identification table 41' stored in the server 30, which constitutes the data transmission system 1' of the variant example. The data identification table 41' defines the distribution data corresponding to the identification data, and a kind of the distribution data corresponding to each place. For example, the data identification table 41' defines the distribution data of "A10" corresponding to a place Z1 of the identification data 100, and the distribution data of "A11" corresponding to a place Z2. In addition, the distribution data in which the correspondence is defined for each place has the specific contents relating to each place. Further, when receiving the identification data and the position data, the server 30 identifies a kind of the distribution data corresponding to the identification data and the position data on the basis of the content of the data identification table 41' shown in Figure 14 (b) , and transmits the identified distribution data to the cellular phone 60. In addition, parts of the data transmission system 1' of the variant example other than the above-described parts are same as those of the above-described data transmission system 1, so that descriptions are omitted.

A transmission method of the distribution data with the data transmission system 1' of the variant example has the following processing process. When the toy 10 is connected to the cellular phone 60, the cellular phone 60 detects the connection of the toy 10; detects the present position; generates the position data; and reads out the communication start data and identification data from the toy 10. Further, the cellular phone 60 establishes connection to the server 30 by the read-out communication start data, and transmits the identification data and the position data to the server 30. On the other hand, the server 30 identifies the distribution data corresponding to the received identification data and position data, and transmits the distribution data to the cellular phone 60. By carrying out such the processing, the cellular phone 60 can acquire data relating to the toy 10 corresponding to the present position. In addition, as an example of application of the data transmission system 1', it can be considered that, when an event relating to the toy 10 is carried out, data of a map, a transport means and the like for showing a route from a place where the cellular phone 60 is positioned to an event hall are transmitted.

Further, in the data transmission system 1' of the variant example, a position of a relay station with respect to the communication of the communication apparatus may be used for detecting the position. More particularly, it is preferable that a relay station of PHS, a communication relay unit of a wireless LAN or the like is used. In this case, the server 30 determines the position of the communication apparatus, which is the communication destination, on the basis of the position of such the relay station, so as to transmit the distribution data corresponding to the determined position. Further, the server 30 may transmit a menu by which the cellular phone 60 can select any one of the distribution data corresponding to the position and the distribution data corresponding to only the identification data.

## Claims

1. A data transmission method in which a data transmission device transmits data to a communication apparatus having a plurality of external connection units,
wherein the communication apparatus detects that a storage medium storing specific identification data and communication start data are connected to one or more of a plurality of the external connection units, where the communication start data are for making the communication apparatus to start a communication processing;
reads out the communication start data from one of a plurality of the connected storage mediums and the identification data from all connected storage mediums, when detecting that a plurality of storage mediums is connected;
starts the communication processing by the read-out communication start data; and
transmits all the identification data to the data transmission device, and
wherein the data transmission device transmits data, which correspond to all the received identification data, to the communication apparatus.

2. A data transmission method in which a data transmission device transmits data to a communication apparatus connected with an intermediate connection device which can connect to a storage medium and has specific identification data,
wherein the communication apparatus detects that a storage medium storing specific identification data and communication start data is connected to the intermediate connection device, where the communication start data are for making the communication apparatus to start a communication processing;
reads out the communication start data from the connected storage medium and the identification data from the connected storage medium and the intermediate connection device, when detecting that the storage medium is connected;
starts the communication processing with the read-out communication start data; and
transmits all identification data to the data transmission device, and
wherein the data transmission device transmits data, which correspond to all the received identification data, to the communication apparatus.

3. The data transmission method as claimed in claim 1 or 2,
wherein the data transmission device has a table, in which data transmitted corresponding to the identification data is defined; and
specifies data corresponding to all the received identification data on the basis of the table.

4. The data transmission method as claimed in any one of claims 1 to 3,
wherein the data transmission device measures the time from the start of transmitting data; and
changes data to be transmitted when the measured time reaches to the predetermined time.

5. The data transmission method as claimed in any one of claims 1 to 4,
wherein the communication apparatus reads out identification data from the detected storage medium when detecting that the storage medium is connected while receiving data from the data transmission device; and
transmits the read-out identification data to the data transmission device, and
wherein the data transmission device transmits menu data to the communication apparatus corresponding to the received identification data, where the menu data are for accepting an instruction indicating whether data to be transmitted are changed or not.

6. A data transmission method in which a data transmission device transmits data to a communication apparatus having an external connector,
wherein the communication apparatus detects that a storage medium storing specific identification data and communication start data is connected to the external connector, where the communication start data is for making the communication apparatus to start a communication processing;
reads out the communication start data and the identification data from the connected storage medium when detecting that the storage medium is connected; starts the communication processing with the read-out communication start data; and
transmits the identification data to the data transmission device, and
wherein the data transmission device transmits data corresponding to the received identification data to the communication apparatus;
measures the time from the start of transmitting data; and
changes data to be transmitted when the measured time reaches to the predetermined time.

7. A data transmission method in which a data transmission device transmits data to a communication apparatus having a position detection means and an external connector,
wherein the communication apparatus detects that a storage medium storing specific identification data and communication start data is connected to the external connector, where the communication start data is for making the communication apparatus to start a communication processing;
detects a position by the position detecting means and reads out the communication start data and the identification data from the connected storage medium, when detecting that the storage medium is connected; starts the communication processing with the read-out communication start data; and
transmits the identification data and position data relating to the detected position to the data transmission device, and
wherein the data transmission device transmits data, which correspond to the received identification data and position data, to the communication apparatus.

8. A data transmission system in which a data transmission device transmits data corresponding to the received identification data to a communication apparatus,
wherein the system comprises a storage medium which has a connection unit capable of being connected with an external apparatus and stores specific identification data and communication start data for making the communication apparatus to start a communication processing,
wherein the communication apparatus comprises,
a plurality of the external connection units;
a detection means for detecting that the storage medium is connected to one or more of a plurality of the external connection units;
a reading-out means for reading out communication start data from one of a plurality of the connected storage mediums and identification data from all the connected storage mediums, when the detection means detects that a plurality of storage mediums are connected; and
a transmission means for starting the communication processing with the communication start data read-out by the reading-out means, and for transmitting all the identification data to the data transmission device, and
wherein the data transmission device comprises a data transmission means for transmitting data corresponding to all the received identification data.

9. A data transmission system in which a data transmission device transmits data corresponding to the received identification data to a communication apparatus,
wherein the system comprises
an operation unit;
a connection unit capable of being connected to an external apparatus;
an operation control unit for operating the operation unit on the basis of operation data accepted via the connection unit;
a toy having a data storage unit storing specific identification data and communication start data for making the communication apparatus to start the communication processing; and
an intermediate connection device which can be connected with the toy, has specific identification data, and is connected to the communication apparatus, and
wherein the communication apparatus comprises,
a detection means for detecting that the toy is connected to the intermediate connection device;
a reading-out means for reading out communication start data from the connected storage medium and identification data from the connected storage medium and the intermediate connection device respectively, when the detection means detects the connection of the storage medium; and
a transmission means for starting the communication processing by the communication start data read out by the reading-out means, and for transmitting all the read-out identification data to the data transmission device, and
wherein the data transmission device comprises,
a storage unit storing a plurality of data having a data structure which is accompanied by operation data for operating the operation unit in a scene shown by contents data relating to any one of a cartoon, an animation, a game and a movie in which a character relating to the toy appears;
a table in which identification data corresponding to respective data stored in the storage unit are defined;
an identification means for identifying data corresponding to all the received identification data on the basis of the table; and
a data transmission means for transmitting the data identified by the identification means.

10. A data transmission device comprising,
a storage unit storing a plurality of data having a data structure which is accompanied by operation data for operating a toy which can be operated in a scene shown by contents data relating to any one of a cartoon, an animation, a game and a movie in which a character appears;
a table in which identification data corresponding to respective data stored in the storage unit are defined;
an identification means for identifying data corresponding to the received identification data on the basis of the table; and
a data transmission means for transmitting the data identified by the identification means.

11. A data structure,
wherein the data structure is accompanied by operation data for operating a toy which can be operated corresponding to the action of a character in a scene shown by contents data relating to anyone of a cartoon, an animation, agameandamovie, in which the character appears.
